# EUROPÄISCHE PATENTSCHRIFT

(11) **EP 0 518 207 B1**
(45) Veröffentlichungstag und Bekanntmachung des Hinweises auf die Patenterteilung: **19.04.1995**
(21) Anmeldenummer: 92109412.4
(22) Anmeldetag: 04.06.1992
(51) Int. Cl.: F02M 69/54, G05D 16/06

(54) **Druckregler**
Pressure regulator
Régulateur de pression

(30) Priorität: 13.06.1991 DE 4119431
(43) Veröffentlichungstag der Anmeldung: 16.12.1992
(73) Patentinhaber: EFFBE-WERK FRITZ BRUMME GmbH, D-65479 Raunheim (DE)
(72) Erfinder: Schiffer, Walter, W-6237 Liederbach (DE); Schröder, Günther, W-6090 Rüsselsheim (DE); Schrepfer, Jürgen, W-6274 Hünstetten (DE); Blohm, K.-H, W-6097 Trebur II (DE)
(74) Vertreter: Knoblauch, Ulrich, Dr.-Ing.

(56) Entgegenhaltungen:
- EP-A- 0 166 528
- DE-C- 2 838 972
- FR-A- 609 101
- FR-A- 842 720
- GB-A- 1 440 482
- US-A- 2 737 167
- PATENT ABSTRACTS OF JAPAN vol. 10, no. 109 (M-472)(2166) 23. April 1986 & JP-A-60 240 863

## Beschreibung

Die Erfindung bezieht sich auf einen Druckregler mit einem Ventilgehäuse, das einen Ventilsitz, eine Ventilverschlußplatte mit einer am Ventilgehäuse befestigten, einen Einlaßraum im Ventilgehäuse begrenzenden Membran aus gummielastischem Material, einen Membranteller, über den die Membran an der Ventilverschlußplatte festgeklemmt ist, und eine Druckfeder aufweist, die sich einerseits am Membranteller und andererseits über einen Führungsteller an einem Boden des Ventilgehäuses abstützt, wobei in der Mitte der Ventilverschlußplatte senkrecht zu dieser eine Führungsstange befestigt ist, die in einem mittleren Führungsloch des Führungstellers axial geführt ist, wobei die Druckfederkraft durch axiales Eindrücken des Gehäusebodens eingestellt ist und wobei die Ventilverschlußplatte auf seiten des Ventilsitzes eine plane Dichtscheibe aufweist.

Bei einem bekannten Druckregler (DE-C-28 38 972), der zur Regelung des Ausgangsdrucks einer Kraftstoffpumpe bei einer Verbrennungskraftmaschine dient, wirkt eine aus Metall bestehende Ventilverschlußplatte mit einem in einer hinterschnittenen Ringnut des Ventilsitzes eingesetzten O-Ring zusammen, der im geöffneten Zustand des Ventils geringfügig über eine auf der der Ventilverschlußplatte zugekehrten Seite ausgebildete ringfördes Ventils geringfügig über eine auf der der Ventilverschlußplatte zugekehrten Seite ausgebildete ringförmige Dichtlippe axial vorsteht. Beim Aufsetzen der Ventilverschlußplatte auf dem Ventilsitz wird zunächst der O-Ring soweit verformt, bis die Ventilverschlußplatte auf der Dichtlippe aufsitzt. Da sich der O-Ring im Laufe der Zeit bleibend verformt, hat er schließlich nur noch eine geringe Dichtwirkung. Sodann besteht die Möglichkeit, daß die Ventilverschlußplatte aufgrund örtlich geringfügig unterschiedlicher Verformungen der Membran und örtlich geringfügig unterschiedlicher Axialkräfte der Druckfeder beim Schließen nicht von Anfang an parallel zur Ebene des O-Rings bzw. der Dichtlippe oder -rippe aufsitzt bzw. auch nicht parallel zu diesen vom Ventilsitz abhebt, mit der Folge, daß das Ventil sowohl beim Schließen als auch beim Öffnen jeweils bei unterschiedlichen Drücken öffnet bzw. schließt und demzufolge der Schließ- und Öffnungsdruck nicht hinreichend genau reproduzierbar sind, um den gewünschten Sollwert des Drucks möglichst genau einzuhalten. Sodann ist die den Drucksollwert bestimmende Kraft der Druckfeder mit einer Stellschraube einstellbar, die in einer die Bodenwand des Ventilgehäuses durchsetzenden Innengewinde-Buchse verstellbar ist und über einen der Führung der Druckfeder dienenden Führungsteller auf das eine Ende der Druckfeder einwirkt. Hierbei besteht die Gefahr, daß - nach einer werksseitigen Einstellung des Drucksollwerts - durch Unbefugte willkürlich oder durch äußere Kräfte, wie Erschütterungen in Fahrzeugen, unwillkürlich eine unerwünschte Drucksollwertverstellung bewirkt wird.

Aus der FR-A-757 076 ist ein Gasdruckregler mit einem Ventilgehäuse bekannt, das einen Ventilsitz, eine Ventilverschlußplatte mit einer am Ventilgehäuse befestigten, einen Einlaßraum im Ventilgehäuse begrenzenden Membran, einen Membranteller, über den die Membran an der Ventilverschlußplatte festgeklemmt ist, und eine Zugfeder aufweist, die einerseits am Ventilgehäuse und andererseits am einen Ende einer Führungsstange befestigt ist, das die Ventilverschlußplatte, die Membran und den Membranteller in der Mitte durchsetzt. Das andere Ende der Führungsstange ist in einem Loch einer gehäusefesten Membranführungs-Kappe über dem Membranteller geführt. Diese Führung soll die Anordnung des Ventils in beliebiger Lage gestatten.

Aus der EP-A-166 528, die den nächstkommenden Stand der Technik bildet, ist ein Druckregler der eingangs genannten Art bekannt, dessen Dichtscheibe an der Ventilverschlußplatte angelenkt ist und mit einer Dichtlippe des Ventilsitzes zusammenwirkt. Eine Führungsstange ist mit radialem Spiel in einem Loch der Verschlußplatte axial verschiebbar angelenkt. Sowohl die Ventilverschlußplatte als auch die Dichtscheibe sind hierbei in aufwendiger Weise allseitig und relativ zueinander schwenkbar gelagert. Es besteht mithin ebenfalls die Gefahr, daß das Ventil sowohl beim Schließen als auch beim Öffnen jeweils bei unterschiedlichen Drücken öffnet bzw. schließt und demzufolge der Schließ- und Öffnungsdruck nicht hinreichend genau reproduzierbar sind, um den gewünschten Sollwert des Drucks möglichst genau einzuhalten.

Der Erfindung liegt die Aufgabe zugrunde, einen Druckregler der eingangs genannten Art anzugeben, bei dem der Drucksollwert bei geringerem Aufwand mit höherer Genauigkeit eingehalten wird.

Erfindungsgemäß ist diese Aufgabe dadurch gelöst, daß die Führungsstange starr an der Ventilverschlußplatte befestigt ist und die Dichtscheibe aus gummielastischem Material besteht.

Bei dieser Ausbildung ist sichergestellt, daß die Ventilverschlußplatte sowohl beim Schließen als auch beim Öffnen des Ventils eine zu sich selbst genau parallele Bewegung ausführt und demzufolge beim Schließen oder Öffnen des Ventils von Anfang an ohne Verkantung planparallel zu sich selbst auf dem Ventilsitz aufsitzt bzw. von diesem abhebt. Dadurch ergibt sich ein mit hoher Genauigkeit definierter Schließ- bzw. Öffnungsdruck, der eine genauere Einhaltung des Drucksollwerts bei der Regelung ermöglicht.

Vorzugsweise ist dafür gesorgt, daß der Führungsteller einen sich vom Führungsloch zur Membran hin konisch erweiternden Zentrierungseinzug für die Führungsstange aufweist. Dadurch ist sichergestellt, daß die Führungsstange bei der Montage des Druckreglers leicht in das Führungsloch eingeführt werden kann.

Ferner ist es günstig, wenn der Führungsteller durch einen in eine mittlere Vertiefung des Führungstellers eingreifenden Einzug des Gehäusebodens koaxial zur Ventilverschlußplatte zentriert ist. Auf diese Weise ist sichergestellt, daß auch die Führungsstange zentriert ist.

Vorzugsweise ist dafür gesorgt, daß die die Vertiefung umgebende Ringfläche des Führungstellers radial nach außen abfällt. Dies ermöglicht es, den maximalen axialen Verformungsweg des Gehäusebodens auf die Druckfeder zu übertragen und damit die den Drucksollwert bestimmende Federkraft genau festzulegen, gestattet aber dennoch, den Durchmesser der Druckfeder möglichst groß zu wählen, so daß sie nicht knickt und ein das Wickeln der Feder erleichterndes Wickelverhältnis (Verhältnis von Feder- zu Drahtdurchmesser) aufweisen kann.

Sodann kann dafür gesorgt sein, daß die Dichtscheibe eine Härte von etwa 60 bis 70 Shore aufweist, die mit einer harten Dichtlippe auf dem Ventilsitz unmittelbar zusammenwirkt. Hierbei kann die Dichtlippe aus einem metallischen Werkstoff, einem verstärkten thermoplastischen Kunststoff oder Keramik bestehen. Aufgrund der gummielastischen Dichtscheibe mit minimalem Druckverformungsrest wird sich die Dichtlippe beim Schließen des Ventils nur geringfügig in die Dichtscheibe eindrücken und diese auch nur geringfügig verformen.

Vorzugsweise besteht die Dichtscheibe aus einem Fluor-Elastomer. Die Dichtlippe kann ein etwa halbkreisförmiges oder nahezu spitzes Querschnittsprofil aufweisen, um eine dichte Anlage der Dichtlippe an der Dichtscheibe sicherzustellen.

Sodann kann dafür gesorgt sein, daß die Dichtscheibe in einer kreiszylindrischen Vertiefung der Ventilverschlußplatte unter Zwischenschaltung eines Haftvermittlers einvulkanisiert ist und ihre dem Ventilsitz zugekehrte Fläche mit der sie umgebenden Ringfläche der Ventilverschlußplatte eine plane Ebene bildet. Auf diese Weise ist sichergestellt, daß die Dichtscheibe unverrückbar festliegt und durch das bei geöffnetem Ventil an ihr vorbeiströmende Fluid nicht verschoben oder verformt wird. Bei geschlossenem Ventil liegt dagegen die Ringfläche der Ventilverschlußplatte am Ventilsitz außerhalb der Dichtlippe an, so daß sich aufgrund der harten Materialien von Ventilverschlußplatte einerseits und Ventilsitz andererseits eine definierte Schließ- und Öffnungslage der Ventilverschlußplatte ergibt, wobei eine entsprechend definierte, jedoch geringe Eindringtiefe der Dichtlippe in die Dichtscheibe eingehalten wird. Dies gewährleistet einen entsprechend definierten Schließ- bzw. Öffnungsdruck, der weitgehend unabhängig von einer bleibenden Verformung der Dichtscheibe ist.

Hierbei sollte die Dichtlippe eine Höhe von etwa 10 bis 15 % der Dicke der Dichtscheibe über dem Ventilsitz aufweisen, so daß eine hinreichende Nachgiebigkeit der Dichtscheibe und Eindringtiefe der Dichtlippe in die Dichtscheibe bei dennoch verhältnismäßig hoher Härte der Dichtscheibe gewährleistet ist.

Sodann kann in der der Ventilverschlußplatte zugekehrten Stirnseite des Ventilsitzes eine die Dichtlippe umgebende Ringnut ausgebildet sein, deren Außendurchmesser etwa gleich dem der Dichtscheibe ist. Diese Ringnut verringert die Berührungsfläche zwischen Dichtscheibe und Stirnseite des Ventilsitzes und damit die Gefahr eines Festklebens der Dichtscheibe am Ventilsitz.

Vorzugsweise weist die Membran einen Nitrilkautschuk (NBR) oder ein Fluor-Elastomer auf. Dieses Material ist umweltverträglich und läßt sich leicht mit der gewünschten Elastizität und Festigkeit herstellen.

Darüber hinaus kann die Membran ein Verstärkungsgewebe aus Polyimid oder Polyamid aufweisen, um die Festigkeit noch weiter zu steigern.

Eine besonders vorteilhafte Ausbildung besteht darin, daß die Ventilverschlußplatte auf ihrer dem Ventilsitz abgewandten Seite einen Vorsprung aufweist, der durch miteinander fluchtende mittlere Löcher in der Membran und im Membranteller hindurchgeführt ist, wobei die Membran zwischen Ventilverschlußplatte und Membranteller liegt, und daß am Umfang des Vorsprungs durch axiales Stauchen kleiner Randabschnitte der dem Ventilsitz abgekehrten Stirnfläche des Vorsprungs radial vorstehende Laschen ausgebildet sind, die den Membranteller zwischen sich und der Membran festklemmen. Auf diese Weise kommt man mit einer sehr geringen Kraft zum Festklemmen der Membran zwischen Ventilverschlußplatte und Membranteller aus, da zur Ausbildung der Laschen, die eine Art Zahnkranz am Umfang des Vorsprungs bilden, eine geringere Kraft als zur Ausbildung eines kontinuierlich umlaufenden Bördelrands erforderlich ist. Dementsprechend unterliegt die dem Ventilsitz zugekehrte, die Dichtscheibe umgebende Ringfläche der Ventilverschlußplatte beim Formen der Laschen nur einer geringen Belastung, so daß sie sich nicht verformt, wenn die partielle, sternförmige oder zahnkranzförmige Schernietung ausgebildet wird.

Die Erfindung und ihre Weiterbildungen werden nachstehend anhand der Zeichnung eines bevorzugsten Ausführungsbeispiels näher beschrieben. Es zeigen:
- Fig. 1: einen Axialschnitt durch das Ausführungsbeispiel des erfindungsgemäßen Druckreglers,
- Fig. 2: eine Draufsicht auf einen Membranteller mit einem durch eine mittlere Öffnung des Membrantellers hindurchgeführten Fortsatz einer Ventilverschlußplatte, der durch eine partielle, sternförmige Schernietung den Ventilteller und damit eine zwischen diesem und der Ventilverschlußplatte angeordnete Membran an der Ventilverschlußplatte festklemmt, und
- Fig. 3: einen Ausschnitt der Fig. 1 im Zustand einer stärkeren axialen Verformung des Ventilgehäusebodens, um eine darin enthaltene Druckfeder stärker vorzuspannen.

Der dargestellte Druckregler dient zur Regelung des Ausgangsdrucks der Kraftstoff-Einspritzpumpe eines mit Kraftstoffeinspritzung arbeitenden Verbrennungsmotors. Er hat ein zweiteiliges Ventilgehäuse, bestehend aus einem Gehäuseoberteil 1 und einem Gehäuseunterteil 2, die dadurch miteinander verbunden sind, daß ein Flansch 3 des Gehäuseunterteils 2 um einen Flansch 4 des Gehäuseoberteils 1 herumgebördelt ist.

Zwischen den beiden Flanschen 3 und 4 ist eine gummielastische Membran 5 aus einem Fluor-Elastomer oder einem Nitrilbutadien-Elastomer mit einem Verstärkungsgewebe aus Polyimid oder Polyamid und einer Härte von etwa 70 Shore eingespannt. Die Membran 5 unterteilt das Ventilgehäuse in einen Einlsßraum 6 und einen Saugraum 7. Sie trägt eine Ventilverschlußplatte 8 mit einer Dichtscheibe 9 aus gummielastischem Fluor-Elastomer mit einer Härte von etwa 60 bis 70 Shore und einer Dicke von etwa 1 mm. Die Dichtscheibe 9 bildet zusammen mit einer umlaufenden, ein etwa halbkreisförmiges Querschnittsprofil aufweisenden metallischen Dichtlippe 10 auf einem Ventilsitz 11 ein Ventil. Die Dichtscheibe 9 ist in einer kreiszylindrischen Vertiefung in der dem Ventilsitz 11 zugekehrten Fläche der Ventilverschlußplatte 8 unter Zwischenschaltung eines Haftvermittlers einvulkanisiert, und ihre dem Ventilsitz 11 zugekehrte Fläche bildet mit der sie umgebenden Ringfläche 21 der Ventilverschlußplatte 8 eine plane Ebene. In der der Ventilverschlußplatte 8 zugekehrten Stirnseite des Ventilsitzes ist eine die Dichtlippe 10 umgebende Ringnut 11a ausgebildet, deren Außendurchmesser etwa gleich dem der Dichtscheibe 9 ist. Diese Ringnut 11a verringert die Berührungsfläche zwischen der Dichtscheibe 9 und der Stirnseite des Ventilsitzes 11 und damit die Gefahr des Festklebens der Dichtscheibe 9 am Ventilsitz 11. Die die Ringnut 11a umgebende Ringfläche 11b der Stirnseite des Ventilsitzes 11 und die Ringfläche 21 der Ventilverschlußplatte 8 sind etwa gleich. Das Ventil stellt das reglerinnenseitige Ende eines Rücklauf-Austrittskanals 12 in einem die Wand des unteren Gehäuseteils 2 dicht durchsetzenden Anschlußstutzen 13 dar.

Auf ihrer dem Ventilsitz 11 abgewandten Seite hat die Ventilverschlußplatte 8 einen Vorsprung 14, der durch miteinander fluchtende mittlere Löcher in der Membran 5 und einem Membranteller 15 hindurchgeführt ist, wobei die Membran 5 zwischen Ventilverschlußplatte 8 und Membranteller 15 liegt. Am Umfang des Vorsprungs 14 sind durch axiales Stauchen kleiner Randabschnitte der dem Ventilsitz 11 abgekehrten Stirnfläche des Vorsprungs 14 radial vorstehende Laschen 16 ausgebildet, die den Membranteller 15 und die Membran 5 zwischen sich und der Ventilverschlußplatte 8 festklemmen. Die Laschen 16 sind sternförmig oder zahnkranzartig in gleichen Winkelabständen um den Umfang des Vorsprungs 14 herum verteilt. Sie erfordern nur eine geringfügige Verformungskraft zu ihrer Ausbildung, so daß eine entsprechend geringe Reaktionskraft auf die Ringfläche 21 ausgeübt und die Ringwand der die Dichtscheibe 9 aufnehmenden zylindrischen Vertiefung beim Festklemmen der Membran 5 zwischen Membranteller 15 und Ventilverschlußplatte 8 nicht zu hoch belastet und dementsprechend nicht verformt wird.

Koaxial in dem Vorsprung 14, d.h. in der Mitte der Ventilverschlußplatte 8, ist senkrecht zu dieser eine Führungsstange 17 in einer koaxialen Bohrung 18 im Preßsitz starr befestigt. Die Führungsstange 17 ist mit ihrem anderen Endabschnitt in einem Führungsloch 19 eines Führungstellers 20 geführt. Der Führungsteller 20 hat einen sich vom Führungsloch 19 zur Membran 5 hin konisch erweiternden Zentrierungseinzug 22 für die Führungsstange 17.

Am Membranteller 15 einerseits und dem Führungsteller 20 andererseits liegt eine Druckfeder 23 jeweils mit einem ihrer Enden an. Sodann ist der Führungsteller 20 durch einen in eine mittlere Vertiefung 24 des Führungstellers 20 eingreifenden Einzug 25 des Gehäusebodens 26 koaxial zur Ventilverschlußplatte 8 zentriert.

Die Druckseite der Kraftstoffpumpe steht über einen seitlichen Anschlußstutzen 27 mit dem Einlaßraum 6 des Druckreglers und parallel dazu mit der Einlaßseite des Verbrennungsmotors (über eine nicht dargestellte Leitung) in Verbindung.

Sodann ragt ein dritter Anschlußstutzen 28 in den Saugraum 7 durch die Wand des Gehäuseoberteils 1. Er steht mit der Saugseite des Verbrennungsmotors in Verbindung.

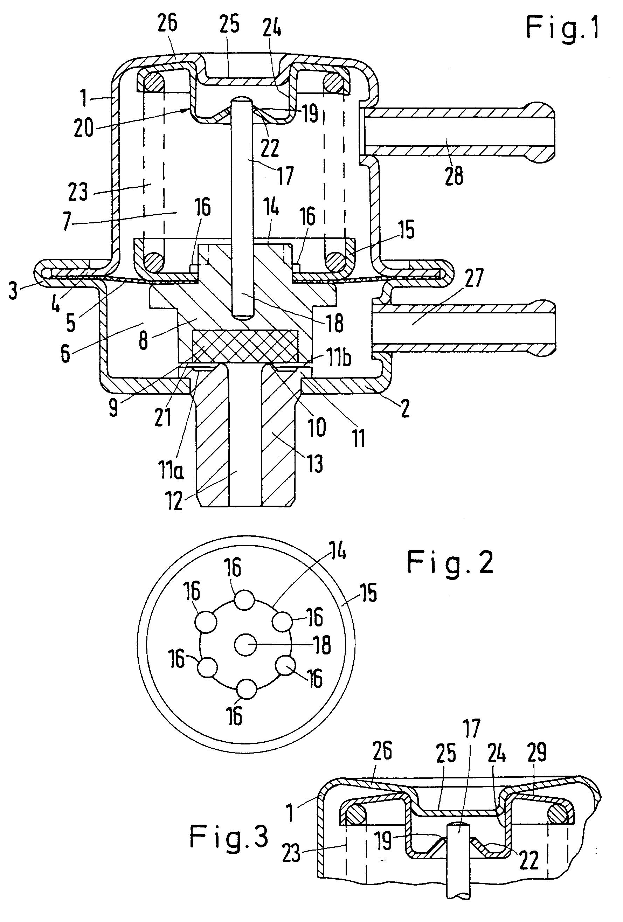

Die Druckfeder 23 belastet über den Membranteller 15 die Ventilverschlußplatte 8 in Schließrichtung des Ventils. Ihre Vorspannung wird durch axiales Eindrücken des Gehäusebodens 26 eingestellt. So hat sie in der in Fig. 1 dargestellten Lage des Gehäusebodens 26 eine geringere Vorspannung als in der in Fig. 3 dargestellten Lage des Gehäusebodens 26. Hierdurch entfallen zusätzliche Einstellmittel, wie Stellschraube und Sicherungseinrichtung für diese, um die Federkraft einzustellen. Sodann ist die die Vertiefung 24 umgebende Ringfläche 29 des Führungstellers 20 radial nach außen konisch abfallend ausgebildet. Dies stellt sicher, daß der maximale axiale Verformungsweg des Gehäusebodens 26 auf die Druckfeder 23 übertragen wird, um ihre Vorspannung genau einzustellen. Dieser Verformungsweg nimmt vom radial äußeren Rand des Gehäusebodens 26 radial zur Mitte hin zu und wird im wesentlichen nur auf den inneren Rand der Ringfläche 29 ausgeübt, der an die axiale Umfangswand der Vertiefung 24 angrenzt.

Wenn während des Betriebs die durch den Pumpendruck im Einlaßraum 6 auf die Membran 5 und den Membranteller 15 ausgeübte Kraft die aus der Kraft der Druckfeder 23 und dem Saugdruck im Saugraum 7 resultierende, auf die Membran 5 und den Membranteller 15 ausgeübte Kraft überschreitet, wird die Ventilverschlußplatte 8 von der Dichtlippe 10 abgehoben, so daß das Ventil öffnet und der Druck im Einlaßraum 6 - und damit auch der Kraftstoffdruck auf der Einlaßseite des Verbrennungsmotors - abgebaut wird. Dieser Druck kann daher einen vorbestimmten, hauptsächlich durch die Wirkfläche der Membran 5 und die Kraft der Feder 23 bestimmten Druck nicht überschreiten.

## Patentansprüche

1. Druckregler mit einem Ventilgehäuse (1, 2), das einen Ventilsitz (11), eine Ventilverschlußplatte (8) mit einer am Ventilgehäuse (1, 2) befestigten, einen Einlaßraum (6) im Ventilgehäuse (1, 2) begrenzenden Membran (5) aus gummielastischem Material, einen Membranteller (15), über den die Membran an der Ventilverschlußplatte (8) festgeklemmt ist, und eine Druckfeder (23) aufweist, die sich einerseits am Membranteller (15) und andererseits über einen Führungsteller (20) an einem Boden (26) des Ventilgehäuses abstützt, wobei in der Mitte der Ventilverschlußplatte (8) senkrecht zu dieser eine Führungsstange (17) befestigt ist, die in einem mittleren Führungsloch (19) des Führungstellers (20) axial geführt ist, wobei die Druckfederkraft durch axiales Eindrücken des Gehäusebodens (26) eingestellt ist und wobei die Ventilverschlußplatte (8) auf seiten des Ventilsitzes (11) eine plane Dichtscheibe (9) aufweist, dadurch gekennzeichnet, daß die Führungsstange (17) starr an der Ventilverschlußplatte (8) befestigt ist und die Dichtscheibe aus gummielastischem Material besteht.

2. Druckregler nach Anspruch 1, dadurch gekennzeichnet, daß der Führungsteller (20) einen sich vom Führungsloch (19) zur Membran (5) hin konisch erweiternden Zentrierungseinzug (22) für die Führungsstange (17) aufweist.

3. Druckregler nach Anspruch 1 oder 2, dadurch gekennzeichnet, daß der Führungsteller (20) durch einen in eine mittlere Vertiefung (24) des Führungstellers (20) eingreifenden Einzug (25) des Gehäusebodens (26) koaxial zur Ventilverschlußplatte (8) zentriert ist.

4. Druckregler nach Anspruch 3, dadurch gekennzeichnet, daß die die Vertiefung (24) umgebende Ringfläche (29) des Führungstellers (20) radial nach außen abfällt und die Druckfederkraft durch axiales Eindrücken des Gehäusebodens eingestellt ist.

5. Druckregler nach einem der Ansprüche 1 bis 4, dadurch gekennzeichnet, daß die Dichtscheibe (9) eine Härte von etwa 60 bis 70 Shore aufweist und mit einer harten Dichtlippe (10) auf dem Ventilsitz (11) unmittelbar zusammenwirkt.

6. Druckregler nach einem der Ansprüche 1 bis 5, dadurch gekennzeichnet, daß die Dichtscheibe (9) aus einem Fluor-Elastomer mit minimalem Druckverformungsrest besteht.

7. Druckregler nach Anspruch 5 oder 6, rückbezogen auf Anspruch 5, dadurch gekennzeichnet, daß die Dichtlippe (10) ein etwa halbkreisförmiges oder nahezu spitzes Querschnittsprofil aufweist.

8. Druckregler nach einem der Ansprüche 1 bis 7, dadurch gekennzeichnet, daß die Dichtscheibe (9) in einer kreiszylindrischen Vertiefung der Ventilverschlußplatte (8) unter Zwischenschaltung eines Haftvermittlers einvulkanisiert ist und ihre dem Ventilsitz (11) zugekehrte Fläche mit der sie umgebenden Ringfläche (21) der Ventilverschlußplatte (8) eine plane Ebene bildet.

9. Druckregler nach Anspruch 8, rückbezogen auf einen der Ansprüche 5 bis 7, dadurch gekennzeichnet, daß die Dichtlippe (10) eine Höhe von etwa 10 bis 15 % der Dicke der Dichtscheibe (9) über dem Ventilsitz (11) aufweist.

10. Druckregler nach Anspruch 9, dadurch gekennzeichnet, daß die Eindringtiefe der Dichtlippe durch den Anschlag der Ringfläche (21) am Ventilsitz (11) begrenzt ist.

11. Druckregler nach Anspruch 5 oder einem der Ansprüche 6 bis 10, rückbezogen auf Anspruch 5, dadurch gekennzeichnet, daß in der der Ventilverschlußplatte (8) zugekehrten Stirnseite des Ventilsitzes (11) eine die Dichtlippe (10) umgebende Ringnut (11a) ausgebildet ist, deren Außendurchmesser etwa gleich dem der Dichtscheibe (9) ist.

12. Druckregler nach einem der Ansprüche 1 bis 11, dadurch gekennzeichnet, daß die Membran (5) einen Nitrilkautschuk (NBR) oder ein Fluor-Elastomer aufweist.

13. Druckregler nach einem der Ansprüche 1 bis 12, dadurch gekennzeichnet, daß die Membran (5) ein Verstärkungsgewebe, z.B. aus Polyimid oder Polyamid, aufweist.

14. Druckregler nach einem der Ansprüche 1 bis 13, dadurch gekennzeichnet, daß die Ventilverschlußplatte (8) auf ihrer dem Ventilsitz (11) abgewandten Seite einen Vorsprung (14) aufweist, der durch miteinander fluchtende mittlere Löcher in der Membran (5) und im Membranteller (15) hindurchgeführt ist, wobei die Membran (5) zwischen Ventilverschlußplatte (8) und Membranteller (15) liegt, und daß am Umfang des Vorsprungs (14) durch axiales Stauchen kleiner Randabschnitte der dem Ventilsitz (11) abgekehrten Stirnfläche des Vorsprungs (14) radial vorstehende Laschen (16) ausgebildet sind, die den Membranteller (15) zwischen sich und der Membran (5) festklemmen.

## Claims

1. Pressure regulator with a valve housing (1, 2) that has a valve seating (11), a valve shutter plate (8) with a membrane (5) of rubber elastic material attached to the valve housing (1, 2) and bounding an inlet space (6) in the valve housing (1, 2), a membrane plate (15) by which the membrane is clamped to the valve shutter plate (8), and a compression spring (23) which is braced at one end against the membrane plate (15) and at the other end, via a guide plate (20), against a base (26) of the valve housing, a guide rod (17) being attached to the the centre of the valve shutter plate (8) at right angles to the latter and led axially in a central guide hole (19) of the guide plate (20), the spring tension being adjusted by axial compression of the housing base (26) and the valve shutter plate (8) having a flat sealing disk (9) at the end closer to the valve seating (11), characterised in that the guide rod (17) is fixed rigidly to the valve shutter plate (8) and the sealing disk is composed of rubber elastic material.

2. Pressure regulator according to claim 1, characterised in that the guide plate (20) has a centring indentation (22) for the guide rod (17) expanding conically from the guide hole (19) to the membrane (5).

3. Pressure regulator according to claim 1 or 2, characterised in that the guide plate (20) is centred coaxially to the valve shutter plate (8) by means of an indentation (25) of the housing base (26) engaging a central depression (24) of the guide plate (20).

4. Pressure regulator according to claim 3, characterised in that the annular surface (29) of the guide plate (20) surrounding the depression (24) slopes down radially outwards and the spring tension is adjusted by axial compression of the housing base.

5. Pressure regulator according to any of the claims 1 to 4, characterised in that the sealing disk (9) has a hardness of about 60 to 70 Shore and interacts directly with a hard sealing lip (10) on the valve seating (11).

6. Pressure regulator according to any of the claims 1 to 5, characterised in that the sealing disk (9) is composed of a fluoro-elastomer with minimal residual compression strain.

7. Pressure regulator according to claim 5 or 6, referenced to claim 5, characterised in that the sealing lip (10) has an approximately semicircular or almost pointed cross-sectional profile.

8. Pressure regulator according to any of the claims 1 to 7, characterised in that the sealing disk (9) is vulcanised in a circular and cylindrical depression in the valve shutter plate (8) through the intermediary of a bonding agent, and its surface facing the valve seating (11) forms a flat plane with the annular surface (21) of the valve shutter plate (8) surrounding it.

9. Pressure regulator according to claim 8, referenced to any of the claims 5 to 7, characterised in that the sealing lip (10) has an elevation of approximately 10 to 15% of the thickness of the sealing disk (9) above the valve seating (11).

10. Pressure regulator according to claim 9, characterised in that the depth of penetration of the sealing lip is limited by the limit stop of the annular surface (21) on the valve seating (11).

11. Pressure regulator according to claim 5 or any of the claims 6 to 10, referenced to claim 5, characterised in that an annular groove (11a), surrounding the sealing lip (10) washer (10), with an outer diameter about the same as that of the sealing disk (9) is constructed in the face of the valve seating (11) facing the valve shutter plate (8).

12. Pressure regulator according to any of the claims 1 to 11, characterised in that the membrane (5) cotains a nitrile rubber (NBR) or a fluoro-elastomer.

13. Pressure regulator according to any of the claims 1 to 12, characterised in that the membrane (5) has a reinforcing fabric made of, eg polyimide or polyamide.

14. Pressure regulator according to any of the claims 1 to 13, characterised in that on the side of the valve shutter plate (8) facing away from the valve seating (11) there is a projection (14) passing through centrally aligned holes in the membrane (5) and in the membrane plate (15) with the membrane (5) being located between the valve shutter plate (8) and the membrane plate (15) and that radially protruding tongues (16) are formed at the perimeter of the projection (14) by axial compression of small peripheral segments of the front end of the projection (14) facing away from the valve seating (11), which clamp the membrane plate (15) between themselves and the membrane (5).

## Revendications

1. Régulateur de pression avec un logement de soupape (1, 2) qui présente un siège de soupape (11), une plaque d'obturation de soupape (8) avec une membrane en caoutchouc élastique fixée sur le logement de soupape (1, 2) délimitant une zone d'admission (6) dans le logement de soupape (1, 2), un disque de membrane (15) sur lequel est fixée la membrane sur la plaque d'obturation de soupape (8), et un ressort de compression (23), qui s'appuie d'une part sur le disque de membrane (15) et d'autre part par un disque de guidage (20) sur un fond (26) du logement de soupape, moyennant quoi au centre de la plaque d'obturation de soupape (8) est fixée verticalement par rapport à celle-ci une tige de guidage (17) qui est menée dans un trou de guidage central (19) du disque de guidage (20) axialement, moyennant quoi la force du ressort de compression est réglée par compression axiale du fond du logement (26) et moyennant quoi la plaque d'obturation de soupape (8) présente une rondelle d'étanchéité plane (9) sur les côtés du siège de soupape (11), caractérisé en ce que la tige de guidage (17) est fixée rigidement sur la plaque d'obturation de soupape (8) et la rondelle d'étanchéité est réalisée en un matériau de caoutchouc élastique.

2. Régulateur de pression selon la revendication 1, caractérisé en ce que le disque de guidage (20) présente un introducteur de centrage (22) pour la tige de guidage (17) s'élargissant coniquement depuis le trou de guidage (19) vers la membrane (5).

3. Régulateur de pression selon la revendication 1 ou 2, caractérisé en ce que le disque de guidage (20) est centré par une protubérance (24) s'appliquant dans un évidement central (25) du disque de guidage (20) du fond de logement (26) coaxialement par rapport à la plaque d'obturation de soupape (8).

4. Régulateur de pression selon la revendication 3, caractérisé en ce que la face annulaire (29) entourant l'évidement (24) du disque de guidage (20) va en se réduisant radialement vers l'extérieur et la force du ressort de compression est réglée par la compression axiale du fond du logement.

5. Régulateur de pression selon l'une des revendications 1 à 4, caractérisé en ce que le disque d'étanchéité (9) présente une dureté d'environ 60 jusqu'à 70 Shores et coopère directement avec une lèvre d'étanchéité dure (10) sur le siège de soupape (11).

6. Régulateur de pression selon l'une des revendications 1 à 5, caractérisé en ce que le disque d'étanchéité (9) consiste en un élastomère au fluor avec un reste de déformation de compression minimale.

7. Régulateur de pression selon la revendication 5 ou 6, rapporté à la revendication 5, caractérisé en ce que la lèvre d'étanchéité (10) présente un profil transversal sensiblement semi-circulaire ou pratiquement pointu.

8. Régulateur de pression selon l'une des revendications 1 à 7, caractérisé en ce que le disque d'étanchéité (9) est vulcanisé dans un évidement cylindrique circulaire de la plaque d'obturation de soupape (8) en intercalant un agent de pontage et sa face dirigée vers le siège de soupape (1) forme avec la face circulaire qui l'entoure (21) de la plaque d'obturation de soupape (8) un plan horizontal.

9. Régulateur de pression selon la revendication 8, rapporté à l'une des revendications 5 à 7, caractérisé en ce que la lèvre d'étanchéité (10) a une hauteur d'environ 10 jusqu'à 15 % de l'épaisseur de la rondelle d'étanchéité (9) sur le siège de soupape (11).

10. Régulateur de pression selon la revendication 9, caractérisé en ce que la profondeur de pénétration de la lèvre d'étanchéité est délimitée par la butée de la face annulaire (21) sur le siège de soupape (11).

11. Régulateur de pression selon la revendication 5 ou l'une des revendications 6 à 10, rapporté à la revendication 5, caractérisé en ce que dans la face frontale du siège de soupape (11) dirigée vers la plaque d'obturation de soupape (8), est formée une gorge annulaire (11a) entourant la lèvre d'étanchéité (10), dont le diamètre extérieur est approximativement égal à celui de la rondelle d'étanchéité (9).

12. Régulateur de pression selon l'une des revendications 1 à 11, caractérisé en ce que la membrane (5) présente un caoutchouc au nitrile (NBR) ou un élastomère au fluor.

13. Régulateur de pression selon l'une des revendications 1 à 12, caractérisé en ce que la membrane (5) présente un tissu de renforcement, par exemple en polyimide ou en polyamide.

14. Régulateur de pression selon l'une des revendications 1 à 13, caractérisé en ce que la plaque d'obturation de soupape (8) comporte une saillie (14) sur le côté détourné du siège de soupape (11), qui est introduit par les trous centraux alignés dans la membrane (5) et dans le disque de membrane (15), moyennant quoi la membrane (5) repose entre la plaque d'obturation de soupape (8) et le disque de membrane (15), et en ce que sur la périphérie de la saillie (14) sont formées par refoulement ou déformation sous pression axiale des petites sections marginales de la surface frontale détournée du siège de soupape (11) de la saillie (14) des pattes (16) faisant saillie radialement qui coincent le disque de membrane (15) entre lui-même et la membrane (5).
